Europäisches Patentamt

European Patent Office

Office européen des brevets

(19)

(11) Veröffentlichungsnummer : **0 076 893**
**B1**

## (12) EUROPÄISCHE PATENTSCHRIFT

(45) Veröffentlichungstag der Patentschrift :
24.04.85

(21) Anmeldenummer : 82105862.5

(22) Anmeldetag : 01.07.82

(51) Int. Cl.⁴ : **F 16 L 55/02, F 16 K 47/02**

(54) **Füllkörper zur Geräuschreduzierung, insbesondere in Strömungskanälen.**

(30) Priorität : 17.08.81 DEU 8123918

(43) Veröffentlichungstag der Anmeldung :
20.04.83 Patentblatt 83/16

(45) Bekanntmachung des Hinweises auf die Patenterteilung : 24.04.85 Patentblatt 85/17

(84) Benannte Vertragsstaaten :
AT CH DE FR GB LI NL

(56) Entgegenhaltungen :
DE-A- 2 952 600
DE-B- 2 458 323
SOVIET INVENTIONS ILLUSTRATED, Sections P, Q: General/Mechanical, Week D48, 13. Jänner 1982, SU-Q6, Engineering Elements, DERWENT PUBLICATIONS LTD. page 7, column 2

(73) Patentinhaber : Regel + Messtechnik GmbH Regler-und Anlagenbau für Gas-Druckreglung
Osterholzstrasse 45
D-3500 Kassel (DE)

(72) Erfinder : Pick, Werner
Jahnstrasse 43
D-3501 Niestetal-Heiligenrode (DE)
Erfinder : Pflüger, Karl-Heinz
Schulstrasse 34
D-3509 Malsfeld (DE)
Erfinder : Fischer, Rudolf
Hinter den Heyhöfen 14
D-3500 Kassel-Obzw. (DE)

(74) Vertreter : Walther, Horst, Dipl.-Ing.
Wilhelmshöher Allee 275 Postfach 41 01 08
D-3500 Kassel (DE)

## Beschreibung

Die Erfindung betrifft einen Füllkörper zur Reduzierung der Geräuschbildung in Strömungskanälen, insbesondere in Strömungskanälen hinter der Drosselstelle von Gasdruckregelgeräten.

Es ist bekannt, daß beim Hindurchströmen eines Mediums durch ein Druckregelgerät, wie zum Beispiel einem Gasdruckregler oder aber einem Reduzierventil, Geräusche auftreten. Das ist darauf zurückzuführen, daß das Medium beim Entspannungsvorgang zum Beispiel in einem Gasdruckregelgerät mit hoher Geschwindigkeit in den Ausgangsraum hinter der Ventildüsenöffnung austritt, wobei sich Freistrahlen bilden, die sich unter Bildung heftiger Druckschwingungen auflösen, wodurch Geräusche hervorgerufen werden. Um diese Geräuschbildung zu reduzieren, hat man bereits vorgeschlagen, hinter der Entspannungsstelle Füllkörper in den Strömungsraum einzubringen.

Es ist bekannt, als Füllkörper Kugeln zu verwenden (DE-B-2.458.323) ; es ist aber auch bekannt, hierfür Stahlwolle oder Stahlspäne vorzusehen. Die Füllkörper haben dabei die Aufgabe, die räumliche Ausdehnung des Freistrahles einzuschränken und seine Auflösung zu fördern und insbesondere auch auf kurzem Wege eine Vergleichmäßigung des Geschwindigkeitsprofils zu erzwingen.

Es hat sich aber gezeigt, daß die Verwendung von Kugeln als Füllkörper insofern nachteilig ist, als der freie Strömungsquerschnitt aufgrund der hohen Packungsdichte sehr stark eingeschränkt ist. Daraus folgt ein hoher Strömungswiderstand.

Bei Gasdruckreglern kann es vorkommen, daß der Eingangsdruck relativ niedrig ist. Ist nun der Strömungswiderstand infolge der in den Strömungsraum eingebrachten Kugeln sehr hoch, dann ist das Durchflußvermögen erheblich eingeschränkt.

Auch besteht bei den bekannten Füllkörpern die Gefahr, daß die einzelnen Füllkörper unter der Wirkung der Strömungskräfte Eigenbewegungen ausführen, so daß die Füllkörper selbst beschädigt werden können. Hinzu kommt, daß in diesem Falle auch die Füllkörperpackung insgesamt gesehen keine raumstabile Einheit mehr darstellt, wodurch die erstrebte Geräuschherabsetzung wieder in gewissem Umfange aufgehoben ist.

Der Erfindung liegt daher die Aufgabe zugrunde, einen Füllkörper zu schaffen, der so ausgebildet ist, daß die eingebrachte Füllkörperpackung den Strömungsraum auch nach längerer Betriebszeit noch vollständig ausfüllt und eine in sich zusammenhängende raumstabile Einheit darstellt.

Das wird erfindungsgemäß dadurch erreicht, daß der Füllkörper die Form einer Wendel, vorzugsweise aus Federdraht hat.

Eine besonders zweckmäßige Gestaltung besteht dabei darin, daß der Abstand der einzelnen Windungen der Wendel kleiner ist als der Drahtdruckmesser der Wendel. Es hat sich als zweckmäßig herausgestellt, wenn der Abstand zwischen den einzelnen Windungen etwa das 0,5 bis 0,8-fache des Drahtdurchmessers beträgt.

Füllkörper dieser Ausbildung haben den Vorteil, daß sie sich nich mehr ineinander schieben können, so daß eine Volumenreduzierung der in den Strömungsraum eingebrachten Füllkörperpackung nicht mehr stattfinden kann ; mithin die Masse der Füllkörper eine raumstabile Einheit darstellt.

Eine besonders vorteilhafte Ausführungsform eines Füllkörpers besteht darin, daß der Abstand der einzelnen Windungen im mittleren Bereich der Wendel kleiner ist als der Drahtdurchmesser, jedoch der Abstand der Endwindungen der Wendel größer ist als der Drahtdurchmesser, vorzugsweise das 1,2 bis 1,5-fache des Drahtdurchmessers.

Dadurch ist erreicht, daß die einzelnen Füllkörper mit ihrem Endbereich sich miteinander verhaken können und dadurch ein in sich zusammenhängendes raumstabiles Füllgut bilden.

Es ist zweckmäßig, wenn die Füllkörper mit einer Vorspannung von etwa 5 bis 10 % ihres Ausgangsvolumens in den Strömungsraum eingebracht werden.

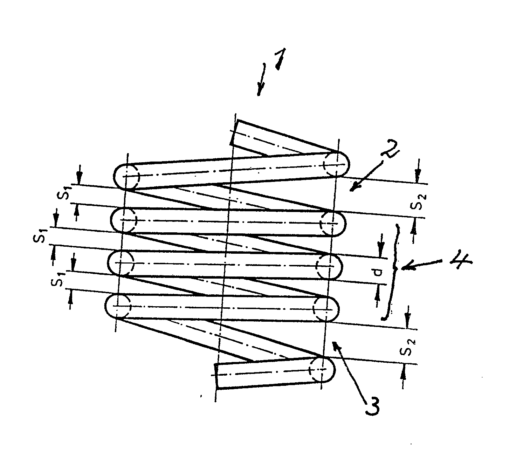

In der Zeichnung ist eine beispielweise Ausführungsform des Füllkörpers dargestellt.

Der Füllkörper besitzt drahtwendelförmige Gestalt 1 und besteht aus Federdraht. Der Querschnitt der Drahtwendel hat vorzugsweise Kreisform. Der Endwindungsbereich ist mit 2 bzw. 3 bezeichnet, der mittlere Windungsbereich trägt das Bezugszeichen 4.

Der Abstand der Windungen (Abstand S1) im mittleren Windungsbereich 4 ist kleiner als der Drahtdurchmesser d ; hingegen ist der Abstand S2 im Endwindungsbereich 2 bzw. 3 größer als der Drahtdurchmesser d. Der Abstand S1 beträgt vorzugsweise zwischen 0,5 d bis 0,8 d ; hingegen beträgt der Abstand S2 zwischen 1,2 d bis 1,5 d.

## Patentansprüche

1. Füllkörper zur Reduzierung der Geräuschbildung in Strömungskanälen, insbesondere in Strömungskanälen hinter der Drosselstelle von Gasdruckregelgeräten, gekennzeichnet durch einen Füllkörper in Form einer Wendel (1), vorzugsweise aus Federdraht.

2. Füllkörper nach Anspruch 1, dadurch gekennzeichnet, daß der Abstand der Windungen im mittleren Bereich (4) der Wendel (1) kleiner ist als der Drahtdurchmesser (d).

3. Füllkörper nach Anspruch 1, dadurch gekennzeichnet, daß der Abstand der Windungen (S2) im Endbereich (2, 3) der Wendel (1) größer ist als der Drahtdurchmesser (d).

4. Füllkörper nach Anspruch 2, dadurch gekennzeichnet, daß der Abstand der Windungen (S1) im mittleren Windungsbereich (4) der Wendel (1) das 0,5 bis 0,8-fache des Drahtdurchmessers (d) beträgt.

5. Füllkörper nach Anspruch 3, dadurch gekennzeichnet, daß der Abstand der Windungen im Endbereich (2,3) der Wendel(1) das 1,2 bis 1,5-fache des Drahtdurchmessers (d) beträgt.

**Claims**

1. Filling body for the reduction of the noise formation in flow channels, particularly in flow channels downstream of the throttle place of gas pressure regulating devices, characterised by a filling body in the shape of a helix (1), preferably of spring wire.

2. Filling body according to claim 1, characterized thereby, that the spacing of the turns in the middle region (4) of the helix (1) is smaller than the wire diameter (d).

3. Filling body according to claim 1, characterised thereby, that the spacing of the turns (S2) in the end region (2, 3) of the helix (1) is greater than the wire diameter (d).

4. Filling body according to claim 2, characterised thereby, that the spacing of the turns (S2) in the middle winding region (4) of the helix (1) amounts to 0.5 to 0.8 times the wire diameter (d).

5. Filling body according to claim 3, characterised thereby, that the spacing of the turns in the end region (2, 3) of the helix (1) amounts to 1.2 to 1.5 times the wire diameter (d).

**Revendications**

1. Corps de remplissage pour l'amortissement du bruit dans les systèmes de canalisation, notamment à l'aval de la zone d'étranglement des appareils de réduction de la pression des gaz, caractérisé en ce que ce corps de remplissage présente une forme d'hélice (1) et est réalisé en fil à ressort.

2. Corps de remplissage selon la revendication 1, caractérisé en ce que l'écartement des spires dans la zone médiane (4) de l'hélice (1) est plus petit que le diamètre (d) du fil.

3. Corps de remplissage selon la revendication 1, caractérisé en ce que l'écartement (S2) des spires dans la zone d'extrémité (2, 3) de l'hélice (1) est plus grand que le diamètre (d) du fil.

4. Corps de remplissage selon la revendication 2, caractérisé en ce que l'écartement (S1) des spires dans la zone médiane (4) de l'hélice (1) est compris entre 0,5 et 0,8 fois le diamètre (d) du fil.

5. Corps de remplissage selon la revendication 3, caractérisé en ce que l'écartement des spires dans la zone d'extrémité (2, 3) de l'hélice (1) est compris entre 1,2 et 1,5 fois le diamètre (d) du fil.